# EUROPEAN PATENT APPLICATION

(11) **EP 3 467 019 A1**
(43) Date of publication of application: **10.04.2019**
(21) Application number: 17806814.4
(22) Date of filing: 01.06.2017
(51) Int. Cl.: C08L 9/00, B60C 1/00, B60C 11/00, C08K 3/04, C08K 3/36, C08L 45/00, C08L 57/02, C08L 61/06, C08L 93/04

(54) **RUBBER COMPOSITION, METHOD FOR PRODUCING RUBBER COMPOSITION, AND TIRE**

(30) Priority: 01.06.2016 JP 2016110516
(71) Applicant: Bridgestone Corporation, Tokyo 104-8340 (JP)
(72) Inventor: HATANAKA Akito, Tokyo 104-8340 (JP)
(74) Representative: Lang, Johannes
(86) International application number: PCT/JP2017/020520
(87) International publication number: WO 2017/209264

(57) **Abstract**

Disclosed is a rubber composition which can improve the fuel efficiency, wet performance and abrasion resistance of a tire, the rubber composition including: a rubber component (A) containing 55% by mass or more of a polybutadiene rubber; a thermoplastic resin (B); and a filler (C), wherein the thermoplastic resin (B) is compounded in an amount of 5 to 40 parts by mass per 100 parts by mass of the rubber component (A), a tan δ at 0°C is 0.5 or less, and a difference between tan δ at 30°C and tan δ at 60°C is 0.070 or less.

## Description

### TECHNICAL FIELD

The present disclosure relates to rubber compositions, methods of producing rubber compositions, and tires.

### BACKGROUND

There are growing demands to reduce the fuel consumption of automobiles in response to global movements toward carbon dioxide emission control along with recent growing interest in environmental issues. To meet such demands, it has been required to improve tire performance by reducing the rolling resistance. In the development of rubber compositions for tire treads which contribute to tire rolling resistance, the loss tangent (tan δ) at around 60°C is generally taken as an effective predictor in view of the fact that the temperature of the tire during normal driving reaches around 60°C. Specifically, the use of tread rubbers formed from rubber compositions having low tan δ at around 60°C reduces the rolling resistance by preventing heat generation of a tire and consequently increases the fuel efficiency of the tire (see PTL 1).

It is also important to ensure braking performance on a wet road surface (hereinafter "wet performance" for short) from the perspective of increasing safety during driving. It is therefore required to improve wet performance as well as fuel efficiency of tires. To that end, PTL 2 teaches improving wet performance by using tire tread rubber compositions having a tan δ at 0°C of 0.95 or more.

### CITATION LIST

### Patent Literature

[PTL 1] JP 2012-92179 A
[PTL 2] JP 2014-9324 A

### SUMMARY

### (Technical Problem)

However, simply using rubber compositions having low tan δ at 60°C for tread rubbers to achieve increased tire fuel efficiency also causes reduction in the tan δ at near 0°C, a measure associated with the friction coefficient (µ) of tire on wet road surface, thus reducing the friction coefficient (µ) of tire on wet road surface and therefore undesirably impairing tire wet performance.

Also, from economical aspects of tires, it is also required to improve abrasion resistance as well as fuel efficiency and wet performance in the development of rubber compositions for tire treads.

A problem to be solved by the present disclosure is therefore to solve the foregoing problem in the related art and provide a rubber composition capable of improving the fuel efficiency, wet performance and abrasion resistance of a tire, and a method of producing the same.

Another problem to be solved of the present disclosure is to provide a tire which is superior in fuel efficiency, wet performance, and abrasion resistance.

### (Solution to Problem)

The gist of the present disclosure for solving the foregoing problems is as follows:

The rubber composition of the present disclosure comprise: a rubber component (A) containing 55% by mass or more of a polybutadiene rubber; a thermoplastic resin (B); and a filler (C),
wherein the thermoplastic resin (B) is compounded in an amount of 5 to 40 parts by mass per 100 parts by mass of the rubber component (A),
a tan δ at 0°C is 0.5 or less, and
a difference between tan δ at 30°C and tan δ at 60°C is 0.070 or less.

With the rubber composition of the present disclosure, it is possible to improve the fuel efficiency, wet performance and abrasion resistance of a tire by applying the rubber composition to a tread rubber of the tire.

It is preferred that the rubber composition of the present disclosure has a difference between tan δ at 0°C and tan δ at 30°C of 0.30 or less. In this case, it is possible to reduce the temperature dependency of fuel efficiency while improving the wet performance of a tire by applying the rubber composition to a tread rubber of the tire.

It is preferred that the rubber composition of the present disclosure has a difference between tan δ at 0°C and tan δ at 60°C of 0.35 or less. In this case, it is possible to reduce the temperature dependency of fuel efficiency by applying the rubber composition to a tread rubber of the tire.

It is preferred that the rubber composition of the present disclosure has a storage modulus as measured at a dynamic strain of 1% at 0°C of 20 MPa or less. In this case, it is possible to achieve fuel efficiency, wet performance and abrasion resistance of a tire in a better balanced manner at the same time by applying the rubber composition to a tread rubber of the tire.

It is preferred that the rubber composition of the present disclosure comprises silica as the filler (C) in an amount of 40 to 70 parts by mass per 100 parts by mass of the rubber component (A). In this case, it is possible to further improve the fuel efficiency and wet performance of a tire by applying the rubber composition to a tread rubber of the tire.

It is preferred that the rubber composition of the present disclosure comprises carbon black as the filler (C) in an amount of 1 to 10 parts by mass per 100 parts by mass of the rubber component (A). In this case, it is possible to achieve high levels of fuel efficiency and wet performance of a tire at the same time.

It is preferred in the rubber composition of the present disclosure that the thermoplastic resin (B) is one or more resins selected from the group consisting of C₅ resins, C₉ resins, C₅-C₉ resins, dicyclopentadiene resins, rosin resins, alkylphenol resins, and terpene phenol resins. In this case, it is possible to further improve the wet performance of a tire by applying the rubber composition to a tread rubber of the tire.

The method of the present disclosure for producing a rubber composition is a method of producing the rubber composition described, the method including the step of kneading, except for a vulcanization compounding agent including a vulcanization agent and a vulcanization accelerator, the rubber component (A), the thermoplastic resin (B) and the filler (C) at 150°C to 165°C.

With the production method of the present disclosure, it is possible to uniformly disperse compounding agents other than the vulcanization compounding agent in the rubber component so that the compounding effect of each compounding agent can be sufficiently exerted and thus the difference between tan δ at 30°C and tan δ at 60°C of the rubber composition can be reduced while reducing the tan δ at 0°C of the rubber composition.

The tire of the present disclosure comprises the rubber composition used for a tread rubber. Because the rubber composition is used for a tread rubber, the tire of the present disclosure is superior in fuel efficiency, wet performance, and abrasion resistance and is suitable as a tire for passenger cars and light trucks.

### (Advantageous Effect)

According to the present disclosure, it is possible to provide a rubber composition which can improve the fuel efficiency, wet performance and abrasion resistance of a tire. According to the present disclosure, it is also possible to provide a method of producing the rubber composition. According to the present disclosure, it is further possible to provide a tire which is superior in fuel efficiency, wet performance and abrasion resistance.

### DETAILED DESCRIPTION

The following provides detailed descriptions of a rubber composition, a method of producing the rubber composition and a tire of the present disclosure based on their embodiments.

### <Rubber Composition>

The rubber composition of the present disclosure comprises a rubber component (A) containing 55% by mass or more of a polybutadiene rubber, a thermoplastic resin (B), and a filler (C), wherein the thermoplastic resin (B) is compounded in an amount of 5 to 40 parts by mass per 100 parts by mass of the rubber component (A), a tan δ (loss tangent) at 0°C is 0.5 or less, and a difference between tan δ at 30°C and tan δ at 60°C is 0.070 or less.

With the polybutadiene rubber content in the rubber component (A) being 55% by mass or more, the abrasion resistance of the rubber composition increases, thereby making it possible to improve the abrasion resistance of a tire to which the rubber composition is applied.

With the polybutadiene rubber content in the rubber component (A) being 55% by mass or more in the rubber composition of the present disclosure, the tan δ at 60°C decreases and the fuel efficiency of a tire to which the rubber composition is applied increases.

With the difference between tan δ at 30°C and tan δ at 60°C being 0.070 or less in the rubber composition of the present disclosure, the tan δ becomes less dependent on temperature thus improving the fuel efficiency of a tire to which the rubber composition is applied over a wide temperature range.

With a specified amount of the thermoplastic resin (B) being compounded in the rubber composition the present disclosure, it is possible to reduce the elastic modulus in a high strain region while preventing it from decreasing in a low strain region. Thus, with the rubber composition of the present disclosure being applied to a tire tread rubber, it is possible to ensure the rigidity of the tread rubber at a portion remote from the road surface where strain is low during running while increasing the deformation volume of the tread rubber at a portion near the road surface where strain is high during running.

With the polybutadiene rubber content in the rubber component (A) being 55% by mass or more and 5 to 40 parts by mass of the thermoplastic resin (B) being compounded in the rubber composition of the present disclosure, it is also possible to ensure the rigidity of the entire tread rubber.

The friction coefficient (µ) on a wet road surface is proportional to a product of the rigidity of the entire tread rubber, the deformation amount of the tread rubber, and the tan δ (loss tangent). Thus, even when the tan δ is reduced from the perspective of improving fuel efficiency, a tire in which the rubber composition of the present disclosure is applied to its tread rubber shows increased deformation amount of the tread rubber while ensuring the rigidity of the entire tread rubber. This allows the friction coefficient (µ) on a wet road surface to be sufficiently increased and the wet performance increases due to high friction coefficient (µ) on a wet road surface. Thus, a tire in which the rubber composition of the present disclosure is applied to its tread rubber shows high fuel efficiency due to low tan δ as well as improved wet performance due to high friction coefficient (µ) on a wet road surface.

From the perspective of improving the fuel efficiency at low temperatures, the rubber composition of the present disclosure has a tan δ at 0°C of 0.5 or less, preferably 0.45 or less, more preferably 0.4 or less. The lower limit of tan δ at 0°C is not particularly limited, but the tan δ at 0°C is usually 0.15 or more. If the tan δ at 0°C of the rubber composition exceeds 0.5, it is not possible to sufficiently improve the tire fuel efficiency at low temperatures.

The rubber composition of the present disclosure preferably has a tan δ at 30°C of 0.4 or less, more preferably 0.35 or less, and usually 0.1 or more. Further, the rubber composition of the present disclosure preferably has a tan δ at 60°C of 0.35 or less, more preferably 0.3 or less, and usually 0.05 or more. In this case, it is possible to improve the tire fuel efficiency over a wide temperature range.

From the perspective of reducing the temperature dependency of fuel efficiency, it is preferred that the rubber composition of the present disclosure has a difference between tan δ at 30°C and tan δ at 60°C of 0.070 or less, preferably 0.060 or less, more preferably 0.055 or less, even more preferably 0.050 or less. Of note, the lower limit of the difference between tan δ at 30°C and tan δ at 60°C is not particularly limited; the difference may be zero. If the difference between tan δ at 30°C and tan δ at 60°C exceeds 0.070, it is not possible to sufficiently reduce the temperature dependency of tire fuel efficiency. Either the tan δ at 30°C or the tan δ at 60°C may be larger than the other. Generally, the tan δ at 30°C is larger than the tan δ at 60°C.

From the perspective of improving the wet performance and reducing the temperature dependency of fuel efficiency, it is preferred that the rubber composition of the present disclosure has a difference between tan δ at 0°C and tan δ at 30°C of 0.30 or less, more preferably in the range of 0.14 to 0.30, even more preferably in the range of 0.15 to 0.25, particularly preferably in the range of 0.16 to 0.20.

Further, from the perspective of reducing the temperature dependency of fuel efficiency, it is preferred that the rubber composition of the present disclosure has a difference between tan δ at 0°C and tan δ at 60°C of 0.35 or less, more preferably 0.24 or less, even more preferably 0.23 or less; the difference may be zero.

From the perspective of increasing the wet performance, it is preferred that the rubber composition of the present disclosure has a storage modulus (E') as measured at a dynamic strain of 1% at 0°C of 20 MPa or less, more preferably 18 MPa or less, even more preferably 16 MPa or less, and preferably 3 MPa or more, more preferably 5 MPa or more. When the storage modulus at a dynamic strain of 1% at 0°C is 20 MPa or less, the rubber composition has high flexibility at low temperatures and by applying the rubber composition to a tread rubber, the tread rubber has good traction performance and therefore the wet performance of a tire can be improved.

The rubber composition of the present disclosure is a non-foamed rubber, free of a foaming agent.

The rubber component (A) of the rubber composition of the present disclosure comprises a polybutadiene rubber in an amount of 55% by mass or more, preferably 60% by mass or more, more preferably 70% by mass or more. The upper limit of the polybutadiene rubber content in the rubber component (A) is not particularly limited and the polybutadiene rubber may account for the total mass of the rubber component (A). However, the polybutadiene rubber content in the rubber component (A) is preferably 90% mass or less, more preferably 80% by mass or less. With the polybutadiene rubber content in the rubber component (A) being 55% by mass or more, the energy generated by friction between the road surface and the rubber composition at 30°C or higher and the loss tangent (tan δ) at 60°C become small. Thus, by applying the rubber composition to a tread rubber of a tire, it is possible to improve the fuel efficiency and abrasion resistance of the tire.

The rubber component (A) may comprise, in addition to polybutadiene rubber (BR), natural rubber (NR) and, furthermore, synthetic diene rubbers such as synthetic isoprene rubber (IR), styrene-butadiene copolymer rubber (SBR) and styrene-isoprene copolymer rubber (SIR) or other synthetic rubbers. These rubber components (A) may be used singly or as a blend of two or more.

The rubber composition of the present disclosure comprises a thermoplastic resin (B). With the thermoplastic resin (B) being compounded in the rubber composition, it is possible to reduce the elastic modulus in a high strain region while preventing it from decreasing in a low strain region. Thus, with the rubber composition compounded with the thermoplastic resin (B) being applied to a tire tread, it is possible to ensure the rigidity of the tread rubber at a portion remote from the road surface where strain is low during running while increasing the deformation volume of the tread rubber at a portion near the road surface where strain is high during running. As a result, the friction coefficient (µ) on a wet road surface increases and therefore the wet performance of a tire can be improved.

The thermoplastic resin (B) is compounded in an amount of 5 to 40 parts by mass, preferably 8 to 30 parts by mass, more preferably 10 to 20 parts by mass, per 100 parts by mass of the rubber component (A). If the amount of the thermoplastic resin (B) compounded in the rubber composition is less than 5 parts by mass per 100 parts by mass of the rubber component (A), it is not possible to sufficiently reduce the elastic modulus of the rubber composition in a high strain region. On the other hand, if the amount of the thermoplastic resin (B) exceeds 40 parts by mass per 100 parts by mass of the rubber component (A), it is not possible to sufficiently prevent reduction in the elastic modulus of the rubber composition in a low strain region.

From the perspective of improving the wet performance, as the thermoplastic resin (B), it is preferred to use C₅ resins, C₉ resins, C₅-C₉ resins, dicyclopentadiene resins, rosin resins, alkylphenol resins, and terpene phenol resins. These thermoplastic resins (B) may be used singly or in combination of two or more.

C₅ resins refer to C₅ synthetic petroleum resins. Examples of C₅ resins include aliphatic petroleum resins obtained for example by polymerizing C₅ fraction, obtained by thermal cracking of naphtha used in petrochemical industry, using a Friedel-Crafts catalyst such as AlCl₃ or BF₃. The C₅ fraction usually contains olefinic hydrocarbons such as 1-pentene, 2-pentene, 2-methyl-1-butene, 2-methyl-2-butene and 3-methyl-1-butene, and diolefinic hydrocarbons such as 2-methyl-1,3-butadiene, 1,2-pentadiene, 1,3-pentadiene, and 3-methyl-1,2-butadiene. C₅ resins are commercially available under trade names such as "Escorez® 1000 series" which are aliphatic petroleum resins manufactured by ExxonMobil Chemical, and "Quintone® A100", "Quintone® B170", "Quintone® M100" and "Quintone® R100" among from "Quintone® 100 series" which are aliphatic petroleum resins manufactured by Zeon Corporation.

C₉ resins refer to resins made from C₉ aromatic hydrocarbons containing as main monomer units vinyl toluene, alkyl styrene and indene in the C₉ fraction obtained as a by-product together with basic petrochemical raw materials such as ethylene and propylene for example by thermal cracking of naphtha used in petrochemical industry. Specific examples of compounds present in the C₉ fraction obtained by thermal cracking of naptha include vinyl toluene, α-methylstyrene, β-methylstyrene, γ-methylstyrene, o-methylstyrene, p-methylstyrene, and indene. Using as raw materials the C₉ fraction, styrene and the like in the C₈ fraction, methyl indene, 1,3-dimethyl styrene and the like in the C₁₀ fraction, and further naphthalene, vinyl naphthalene, vinyl anthracene, p-tert-butyl styrene and the like, C₉ resins can be obtained by copolymerizing a mixture of the C₈-C₁₀ fractions and the like as it is for example using a Friedel-Crafts catalyst. Alternatively, C₉ resins may be petroleum resins modified with hydroxyl group-containing compounds, unsaturated carboxylic acid compounds or other compounds. C₉ resins are commercially available under trade names such as "Nisseki Neopolymer® L-90", "Nisseki Neopolymer® 120", "Nisseki Neopolymer® 130" and "Nisseki Neopolymer® 140" (manufactured by JX Nippon Oil & Energy Corporation).

C₅-C₉ resins refer to C₅-C₉ synthetic petroleum resins. Examples of C₅-C₉ resins include solid polymers obtained by polymerizing C₅ fraction and C₉ fraction derived from petroleum using a Friedel-Crafts catalyst such as AlCl₃ or BF₃. More specific examples of C₅-C₉ resins include copolymers containing styrene, vinyltoluene, α-methylstyrene, indene and the like as the main component. Preferred C₅-C₉ resins are those with a small amount of C₉ or higher components from the perspective of their compatibility with the rubber component (A). The phrase "small amount of C₉ or higher components" as used herein means that the amount of C₉ or higher components is less than 50% by mass, preferably 40% by mass or less, based on the total amount of the resins. C₅-C₉ resins are commercially available under trade names such as "Quintone® G100B" (manufactured by Zeon Corporation) and "ECR 213" (manufactured by ExxonMobil Chemical).

Dicyclopentadiene resins are petroleum resins produced using dicyclopentadiene, obtained by dimerizing cyclopentadiene, as a main raw material. Dicyclopentadiene resins are commercially available under trade names such as "Quintone® 1105", "Quintone® 1325" and "Quintone® 1340" among from "Quintone® 1000 series" which are alicyclic petroleum resins manufactured by Zeon Corporation.

Rosin resins are residues that remain after distilling turpentine essential oil from collected balsams such as pine resin, a sap of a plant of the family Pinaceae, and are natural resins which contain rosin acids (e.g., abietic acid, palustric acid, isopimaric acid) as a main component, and modified and hydrogenated resins obtained by modification or hydrogenation thereof. Examples include natural resin rosins, and polymerized rosin and partially hydrogenated rosin thereof; glycerin ester rosin, and partially hydrogenated rosin, completely hydrogenated rosin and polymerized rosin thereof; and pentaerythritol ester rosin, and partially hydrogenated rosin and polymerized rosin thereof. Natural resin rosins include gum rosin contained in raw pine resin and tall oil, tall oil rosin, and wood rosin. Rosin resins are commercially available under trade names such as "Neotall 105" (manufactured by Harima Chemicals, Group, Inc.); "SN Tack 754" (manufactured by San Nopco Limited); "Lime Resin No. 1", "Pensel A" and "Pensel AD" (manufactured by Arakawa Chemical Industries, Ltd.); "Poly-Pale" and "Pentalyn C" (manufactured by Eastman Chemical Co., Ltd.); and "Highrosin® S" (manufactured by Taishamatsu Essential Oil Co., Ltd.).

Alkylphenol resins are obtained for example by a condensation reaction of alkylphenols and formaldehyde in the presence of catalyst. Alkylphenol resins are commercially available under trade names such as "Hitanol 1502P" (manufactured by Hitachi Chemical Co., Ltd.); "Tackirol 201" (manufactured by Taoka Chemical Co., Ltd.); "Tackirol 250-1" (brominated alkylphenol formaldehyde resin, manufactured by Taoka Chemical Co. Ltd.); "Tackirol 250-III" (brominated alkylphenol formaldehyde resin, manufactured by Taoka Chemical Co., Ltd.); and "R7521P", "SP1068", "R7510PJ", "R7572P" and "R7578P" (manufactured by SI GROUP INC.).

Terpene phenol resins can be obtained for example by reacting terpenes with various phenols using a Friedel Crafts catalyst or further by condensing them with formalin. Terpenes as raw materials are not particularly limited. Preferred are monoterpene hydrocarbons such as α-pinene and limonene, with those containing α-pinene being more preferred and α-pinene being particularly preferred. Terpene phenol resins are commercially available under trade names such as "Tamanol 803L", "Tamanol 901" (manufactured by Arakawa Chemical Industries, Ltd.); and "YS Polyster® U" series, "YS Polyster® T" series, "YS Polyster® S" series, "YS Polyster® G" series, "YS Polyster® N" series, "YS Polyster® K" series, and "YS Polyster® TH" series (manufactured by Yasuhara Chemical Co., Ltd.).

The rubber composition of the present disclosure comprises a filler (C). The rubber composition preferably comprises silica as the filler (C). The silica content in the filler (C) is preferably 70% by mass or more, more preferably 80% by mass or more, even more preferably 90 mass% or more; silica may account for the total mass of the filler (C). When silica is included as the filler (C), the tan δ at 60°C of the rubber composition decreases and the fuel efficiency of a tire to which the rubber composition is applied further increases. With the silica content in the filler (C) being 70% by mass or more, the tan δ at 60°C of the rubber composition decreases and the fuel efficiency of a tire to which the rubber composition is applied further increases.

Silica is not particularly limited and examples thereof include wet silica (hydrated silicic acid), dry silica (anhydrous silicic acid), calcium silicate, and aluminum silicate, with wet silica being preferred. These types of silica may be used singly or in combination of two or more.

In the rubber composition of the present disclosure, the nitrogen adsorption specific surface area of silica in the filler (C) is not particularly limited, and general silica having a nitrogen adsorption specific surface area of greater than 150 m²/g may be used, or silica having an average primary particle diameter of 20 nm or more (relatively large particle size for silica) and a nitrogen adsorption specific surface area of 150 m²/g or less may be used.

In the rubber composition of the present disclosure, silica is preferably compounded in an amount of 40 to 70 parts by mass, more preferably 45 to 60 parts by mass, per 100 parts by mass of the rubber component (A). When silica is compounded in an amount of 40 parts by mass or more per 100 parts by mass of the rubber component (A), the tan δ at 60°C of the rubber composition decreases and the fuel efficiency of a tire to which the rubber composition is applied further increases. When silica is compounded in an amount of 70 parts by mass or less per 100 parts by mass of the rubber component (A), the rubber composition has high flexibility and by applying the rubber composition to a tread rubber of a tire, the deformation volume of the tread rubber increases and therefore the wet performance of the tire can be further improved.

The rubber composition of the present disclosure preferably further comprises carbon black as the filler (C). It is preferred that carbon black is compounded in an amount of 1 to 10 parts by mass, more preferably 3 to 8 parts by mass, per 100 parts by mass of the rubber component (A). When carbon black is compounded in an amount of 1 part by mass or more, the rigidity of the rubber composition increases, and when carbon black is compounded in an amount of 10 parts by mass or less, it is possible to prevent increases in the tan δ. Thus, by applying the rubber composition to a tread rubber of a tire, it is possible to achieve high levels of fuel efficiency and wet performance of the tire at the same time.

Carbon black is not particularly limited and examples thereof include GPF, FEF, HAF, ISAF, and SAF carbon blacks. Preferred are ISAF and SAF carbon blacks from the viewpoint of improving the wet performance of a tire. These types of carbon black may be used singly or in combination of two or more.

The filler (C) may also comprise aluminum hydroxide, alumina, clay, calcium carbonate and/or the like in addition to the silica and carbon black described above.

In the rubber composition of the present disclosure, the filler (C) is preferably compounded in an amount of 30 parts by mass or more, more preferably 40 parts by mass or more, per 100 parts by mass of the rubber component (A), and preferably 100 parts by mass or less, more preferably 80 parts by mass or less, even more preferably 65 parts by mass or less, per 100 parts by mass of the rubber component (A). When the filler (C) is compounded in an amount that falls within the range described above, by applying the rubber composition to a tread rubber of a tire, it is possible to further improve the fuel efficiency and wet performance of the tire.

The rubber composition of the present disclosure preferably further comprises a silane coupling agent in order to increase the compounding effect of silica. The silane coupling agent is not particularly limited and examples thereof include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropy-N,N-dimethylthiocarbamoyl tetrasulfide, 2-triethoxysilylethyl-N,N-dimethylthiocarbamoyl tetrasulfide, 3-trimethoxysilylpropyl benzothiazolyl tetrasulfide, 3-triethoxysilylpropyl benzothiazolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, and dimethoxymethylsilylpropyl benzothiazolyl tetrasulfide. These silane coupling agents may be used singly or in combination of two or more.

The silane coupling agent is preferably compounded in an amount of 2 to 20 parts by mass, more preferably 5 to 15 parts by mass, per 100 parts by mass of silica. When the silane coupling agent is compounded in an amount of 2 parts by mass or more per 100 parts by mass of silica, the compounding effect of silica sufficiently increases, and when the silane coupling agent is compounded in an amount of 20 parts by mass or less per 100 parts by mass of silica, the possibility of gelation of the rubber component (A) is low.

From the viewpoint of processability and workability, the rubber composition of the present disclosure may further comprise a softening agent. The softening agent is preferably compounded in an amount of 1 to 5 parts by mass, more preferably 1.5 to 3 parts by mass, per 100 parts by mass of the rubber component (A). By compounding 1 part by mass or more of the softening agent, kneading of the rubber composition becomes easy, and by compounding 5 parts by mass or less of the softening agent, it is possible to prevent reduction in the rigidity of the rubber composition.

Examples of softening agents include mineral oils derived from minerals, aromatic oils, paraffin oils and naphthene oils derived from petroleum, and palm oils derived from natural products. Preferred are softening agents derived from minerals or petroleum from the viewpoint of improving the wet performance of a tire.

The rubber composition of the present disclosure may further comprise a fatty acid metal salt. Examples of metals used for fatty acid metal salts include Zn, K, Ca, Na, Mg, Co, Ni, Ba, Fe, Al, Cu, and Mn, with Zn being preferred. Examples of fatty acids used for fatty acid metal salts include saturated or unsaturated linear, branched or cyclic C4-C30 fatty acids or a mixture thereof, with saturated or unsaturated linear C10-C22 fatty acids being preferred. Examples of C10-C22 saturated linear fatty acids include lauric acid, myristic acid, palmitic acid, and stearic acid, and examples of C10-C22 unsaturated linear fatty acids include oleic acid, linoleic acid, linolenic acid, and arachidonic acid. Fatty acid metal salts may be used singly or in combination of two or more.

It is preferred that the fatty acid metal salt is compounded in an amount of 0.1 to 10 parts by mass, more preferably 0.5 to 5 parts by mass, per 100 parts by mass of the rubber component (A).

In addition to the rubber component (A), the thermoplastic resin (B), the filler (C), the silane coupling agent, the softening agent, and the fatty acid metal salt, the rubber composition of the present disclosure may also be optionally compounded with compounding agents commonly used in the rubber industry, such as stearic acid, an antioxidant, zinc oxide (zinc white), a vulcanization accelerator and/or a vulcanization agent in amounts that do not compromise the object of the present disclosure. These compounding agents are suitably commercially available. However, it is preferred not to compound thermosetting resins such as novolak type and resol type phenol resins or resorcin resins into the rubber composition of the present disclosure from the perspective of reducing the storage modulus at a dynamic strain of 1% at 0°C of the rubber composition.

The rubber composition of the present disclosure can be used for various rubber products including tires. In particular, the rubber composition of the present disclosure is suitable as a tire tread rubber.

### <Method of Producing Rubber Composition>

The method of the present disclosure for producing a rubber composition is a method of producing the rubber composition described above, the method including the step of kneading, except for a vulcanization compounding agent including a vulcanization agent and a vulcanization accelerator, the rubber component (A), the thermoplastic resin (B) and the filler (C) at 150°C to 165°C.

Kneading the components (A) to (C) except for the vulcanization compounding agent at 150°C to 165°C allows compounding agents other than the vulcanization compounding agent to be uniformly dispersed in the rubber component (A) while avoiding premature vulcanization (scorch), so that the compounding effect of each compounding agent can be sufficiently exerted and thus the difference between tan δ at 30°C and tan δ at 60°C of the rubber composition can be reduced while reducing the tan δ at 0°C of the rubber composition.

In addition to adjusting the kneading temperature described above, the tan δ, the difference in tan δ between 30°C and 60°C and the storage modulus (E') of the rubber composition can also be changed by adjusting the type or blending ratio of the rubber component (A), the type or compounding amount of the thermoplastic resin (B), the type or amount of silica in the filler (C), and/or further the types and amounts of other compounding agents.

In the production method of the present disclosure, kneading may be performed at other temperatures below 150°C after kneading at 150°C to 165°C.

Further, in the production method of the present disclosure, it is preferred to compound a vulcanization compounding agent including a vulcanization agent and a vulcanization accelerator after dispersing compounding agents other than the vulcanization compounding agent sufficiently uniformly in the rubber component (A) and then perform kneading at a temperature where premature vulcanization (scorch) can be avoided, e.g., at 90°C to 120°C.

In the production method of the present disclosure, the kneading time at different temperature ranges is not particularly limited and can be determined as appropriate according to the volumes of the raw materials, the types and/or conditions of the raw materials, etc.

Examples of vulcanization agents include sulfur. The vulcanizing agent is preferably compounded in an amount, in terms of sulfur content, of 0.1 to 10 parts by mass, more preferably 1 to 4 parts by mass, per 100 parts by mass of the rubber component (A). When the vulcanizing agent is compounded in an amount of 0.1 parts by mass or more in terms of sulfur content, it is possible to ensure breaking strength, abrasion resistance and other performance of the vulcanized rubber, and when it is 10 parts by mass or less, it is possible to ensure sufficient rubber elasticity. In particular, when the vulcanization agent is compounded in an amount of 4 parts by mass or less in terms of sulfur content, it is possible to further improve the wet performance of a tire.

The vulcanization accelerator is not particularly limited and examples thereof include thiazole vulcanization accelerators such as 2-mercaptobenzothiazole (M), dibenzothiazyl disulfide (DM), N-cyclohexyl-2-benzothiazylsulfenamide (CZ) and N-tert-butyl-2-benzothiazolylsulfenamide (NS), and guanidine vulcanization accelerators such as 1,3-diphenylguanidine (DPG). The rubber composition of the present disclosure preferably comprises three different types of vulcanization accelerators. The vulcanization accelerator is preferably compounded in an amount of 0.1 to 5 parts by mass, more preferably 0.2 to 3 parts by mass, per 100 parts by mass of the rubber component (A).

The rubber composition of the present disclosure can be produced by compounding the thermoplastic resin (B) and the filler (C), and optionally selected compounding agents, into the rubber component (A) and kneading these components using a Banbury mixer, a roll or the like as described above, followed by heating, extrusion, etc.

### <Tire>

The tire of the present disclosure comprises the above-described rubber composition used for a tread rubber. The tire of the present disclosure is superior in fuel efficiency, wet performance and abrasion resistance because the rubber composition is used for the tread rubber. The tire of the present disclosure can be used as a tire for various vehicles, preferably for passenger cars and light trucks.

Depending on the type of a tire to which the rubber composition is applied, the tire of the present disclosure may be obtained by shaping a tire using an unvulcanized rubber composition followed by vulcanization, or by shaping a tire using a semi-vulcanized rubber subjected to pre-vulcanization or the like followed by regular vulcanization. The tire of the present disclosure is preferably a pneumatic tire. Gases filling the pneumatic tire can include inert gases such as nitrogen gas, argon gas, and helium gas, as well as normal air or air whose partial pressure of oxygen has been adjusted.

### EXAMPLES

The present disclosure will be further described in detail based on Examples, which however shall not be construed as limiting the scope of the present disclosure.

### <Preparation and Evaluation of Rubber Composition>

In accordance with the recipes shown in Tables 1 and 2, components other than a vulcanization compounding agent which consists of sulfur, a vulcanization accelerator and zinc white were kneaded at a maximum temperature of 160°C using a usual Banbury mixer and the vulcanization compounding agent was compounded into the kneaded mass, which was then kneaded at a maximum temperature of 110°C to prepare a rubber composition. The loss tangent (tan δ) and storage elastic modulus (E') of the obtained rubber composition were measured by the methods described below, and wet performance, fuel efficiency and abrasion resistance were also evaluated. The results are shown in Tables 1 and 2.

### (1) Loss Tangent (tan δ) and Storage Modulus (E')

The tan δ (loss tangent) at 0°C, 30°C and 60°C and storage elastic modulus (E') at 0°C of the vulcanized rubber obtained by vulcanizing the rubber composition at 145°C for 33 minutes were measured under a condition of an initial load of 160 mg, a dynamic strain of 1% and a frequency of 52 Hz using a spectrometer manufactured by Ueshima Seisakusho Co., Ltd.

### (2) Wet Performance

A pneumatic radial tire for a passenger car having a size of 195/65R15 was produced using the rubber composition obtained as described above for a tread rubber. The test tire thus prepared was mounted on a test car and the steering stability was rated by the driver's feeling score in the actual vehicle test on a wet road surface and indexed to the feeling rating of the tire of Comparative Example 1 assigned a score of 100. The larger the index value, the better the wet performance.

### (3) Fuel Efficiency

The reciprocal of the tan δ at 60°C of each vulcanized rubber measured as described above was calculated and indexed to the reciprocal of the tan δ of Comparative Example 1 assigned a score of 100. The larger the index value, the smaller the tan δ at 60°C and better fuel efficiency.

### (4) Abrasion Resistance

After vulcanizing the obtained rubber composition at 145°C for 33 minutes, the abrasion amount was measured at 23°C using the Lambourn abrasion tester according to JIS K 6264-2: 2005 and indexed to the reciprocal of the abrasion amount of Comparative Example 1 assigned a score of 100. The larger the index value, the smaller the abrasion amount and better abrasion resistance.

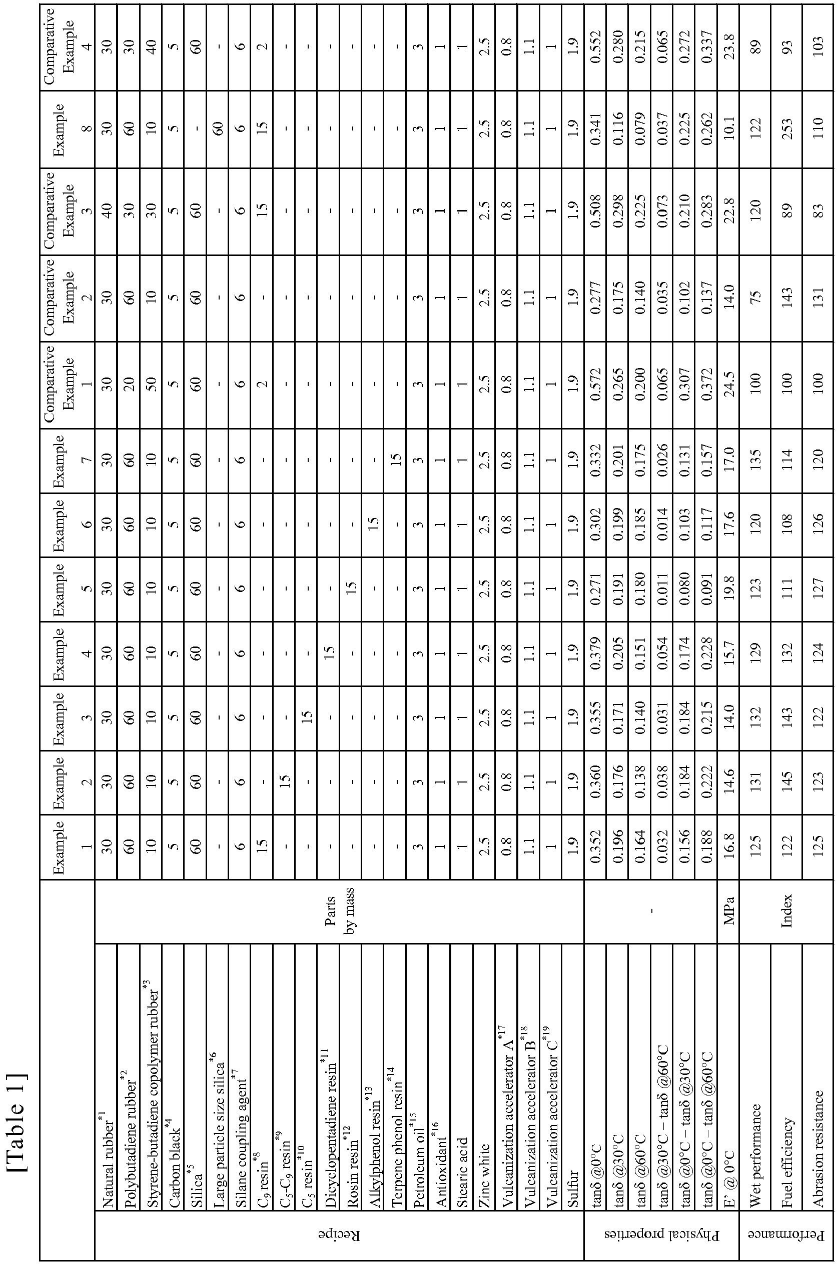

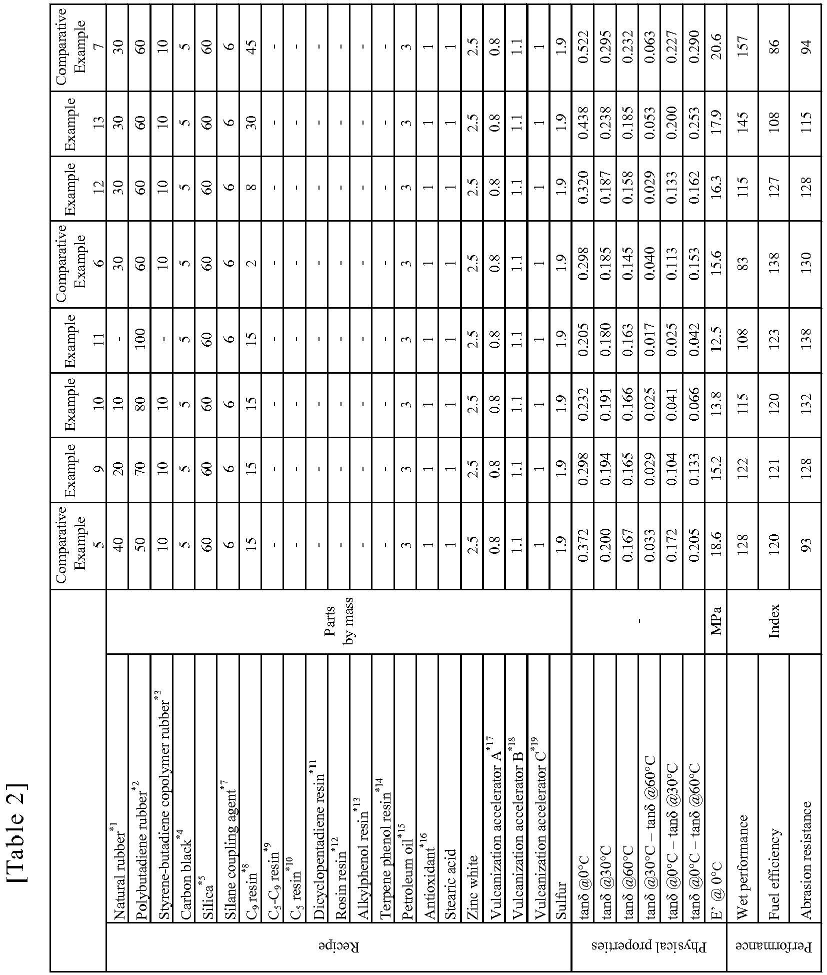

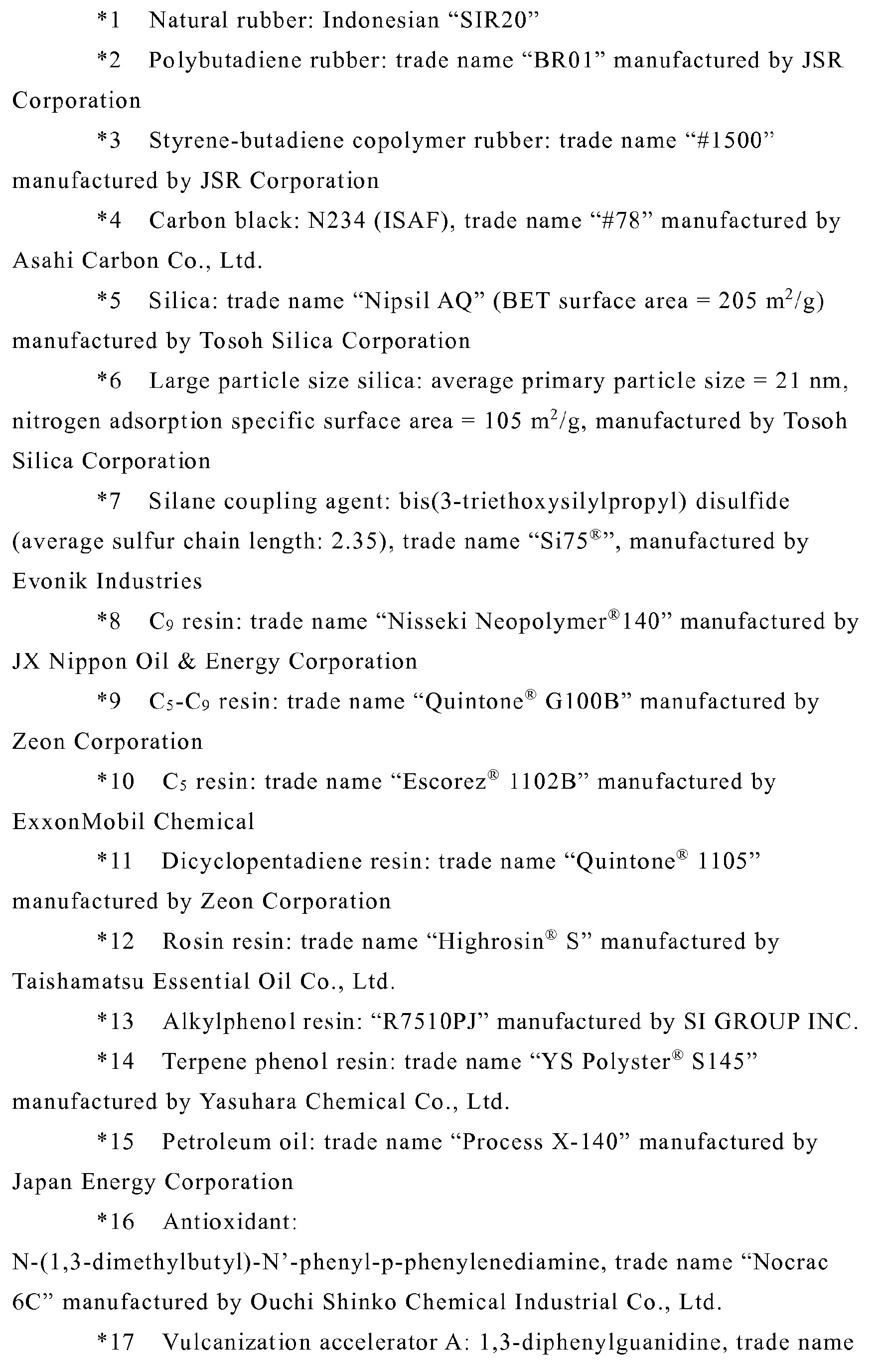

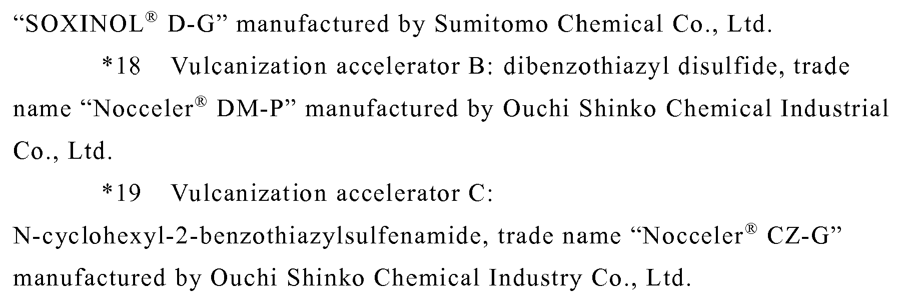

As evident from Tables 1 and 2, the rubber composition of the present disclosure, when applied to a tire, can increase the fuel efficiency, wet performance, and abrasion resistance of the tire.

### INDUSTRIAL APPLICABILITY

The rubber composition of the present disclosure can be used as a tread rubber of a tire. In addition, the method of the present disclosure for producing a rubber composition can be used for the production of such a rubber composition. Furthermore, the tire of the present disclosure can be used as a tire for various vehicles.

## Claims

1. A rubber composition comprising: a rubber component (A) containing 55% by mass or more of a polybutadiene rubber; a thermoplastic resin (B); and a filler (C),
wherein the thermoplastic resin (B) is compounded in an amount of 5 to 40 parts by mass per 100 parts by mass of the rubber component (A),
a tan δ at 0°C is 0.5 or less, and
a difference between tan δ at 30°C and tan δ at 60°C is 0.070 or less.

2. The rubber composition according to claim 1, wherein a difference between tan δ at 0°C and tan δ at 30°C is 0.30 or less.

3. The rubber composition according to claim 1 or 2, wherein a difference between tan δ at 0°C and tan δ at 60°C is 0.35 or less.

4. The rubber composition according to any one of claims 1 to 3, wherein a storage modulus at a dynamic strain of 1% at 0°C is 20 MPa or less.

5. The rubber composition according to any one of claims 1 to 4, which comprises silica as the filler (C) in an amount of 40 to 70 parts by mass per 100 parts by mass of the rubber component (A).

6. The rubber composition according to any one of claims 1 to 5, which comprises carbon black as the filler (C) in an amount of 1 to 10 parts by mass per 100 parts by mass of the rubber component (A).

7. The rubber composition according to any one of claims 1 to 6, wherein the thermoplastic resin (B) is one or more resins selected from the group consisting of C₅ resins, C₉ resins, C₅-C₉ resins, dicyclopentadiene resins, rosin resins, alkylphenol resins, and terpene phenol resins.

8. A method of producing the rubber composition according to any one of claims 1 to 7, comprising the step of kneading, except for a vulcanization compounding agent including a vulcanization agent and a vulcanization accelerator, the rubber component (A), the thermoplastic resin (B) and the filler (C) at 150°C to 165°C.

9. A tire comprising the rubber composition according to any one of claims 1 to 7 used for a tread rubber.
